# EUROPÄISCHE PATENTSCHRIFT

(11) **EP 1 693 683 B1**
(45) Veröffentlichungstag und Bekanntmachung des Hinweises auf die Patenterteilung: **18.01.2012**
(21) Anmeldenummer: 06110227.3
(22) Anmeldetag: 21.02.2006
(51) Int. Cl.: G01S 7/40, H01Q 1/12, H01Q 3/04

(54) **Ausrichtvorrichtung für ein Radargerät**
Aligning device for a radar device
Dispositif d'orientation destiné à un appareil radar

(30) Priorität: 21.02.2005 DE 202005002845 U
(43) Veröffentlichungstag der Anmeldung: 23.08.2006
(73) Patentinhaber: DataCollect Traffic Systems GmbH & Co. KG, 50170 Kerpen (DE)
(72) Erfinder: Overzier, Dirk, 50226 Frechen (DE); Herrlich, Christof, 50171 Kerpen (DE)
(74) Vertreter: Kayser, Martin

(56) Entgegenhaltungen:
- DE-A1- 10 017 575
- US-A- 6 067 054
- US-A1- 2004 041 715
- US-B1- 6 262 691
- PATENT ABSTRACTS OF JAPAN Bd. 2002, Nr. 10, 10. Oktober 2002 (2002-10-10) & JP 2002 181543 A (KOITO IND LTD), 26. Juni 2002 (2002-06-26)

## Beschreibung

Die vorliegende Erfindung betrifft eine Ausrichtvorrichtung für ein Radarmessgerät, insbesondere ein Seitenradarmessgerät.

Ein Radarmessgerät dient der Lokalisierung von Objekten und kann insbesondere auch für die Geschwindigkeitsmessung von sich bewegenden Objekten benutzt werden. Auch sind die Ermittlungen weiterer Daten mit Hilfe von Radarmesssystemen möglich, hierzu gehören insbesondere Abmessungen und Anzahl von Objekten in dem überwachten Bereich.

Die DE 32 19 819 A1 beschreibt einen Doppler-Radar-Geschwindigkeitsmesser. Im Wesentlichen erläutert diese Druckschrift die Funktionsweise eines solchen Geschwindigkeitsmessers, der eine Geschwindigkeit nahezu ohne Messfehler ermitteln kann. Aus dieser Druckschrift geht auch hervor, dass ein Radarmessgerät einen Richtstrahl aussendet, der auf einer elektromagnetischen Emission basiert. Die Frequenz solcher Emission liegt im Mikrowellenbereich.

Wesentlich für eine korrekte Erfassung insbesondere der Geschwindigkeit von sich bewegenden Objekten ist der Ausrichtwinkel, unter dem der Richtstrahl, zumindest ein Zentralstrahl des Richtstrahls, auf das zu messende Objekt fällt. Hierbei hat sich Ausrichtwinkel von 45° als besonders geeignet erwiesen, es sind jedoch auch andere Ausrichtwinkel geeignet. Wesentlich ist, dass der Ausrichtwinkel exakt eingehalten wird, da dieser der Berechnung der Geschwindigkeit zugrunde liegt und nur geringe Ausrichtwinkelabweichungen zu großen Fehlern führen können. Die DE 196 42 811 A1 zeigt eine Autoradarvorrichtung mit einer anbringbaren Laservorrichtung zur horizontalen und vertikalen Ausrichtung der Autoradarvorrichtung.

Insbesondere bei Seitenradarmessgeräten, die am Straßenrand aufgestellt werden oder an feststehenden Objekten befestigbar sind, ist die Ausrichtung in Bezug auf die zu messenden Fahrzeuge und somit der Straße entscheidend. Üblicherweise erfolgt die Ausrichtung des Radarmessgerätes dadurch, dass entlang einer geraden Straße eine Meßlatte aufgestellt wird, die den gleichen Abstand zum Straßenrand oder zu einer Fahrbahnmarkierung wie das Radarmessgerät aufweist. Oftmals werden auch Laternenpfähle oder Straßenschilder zu Hilfe genommen. Das Radarmessgerät wird dann mit Hilfe einer Peileinrichtung in die richtige Position gebracht. Beispielsweise erfolgt die Ausrichtung dadurch, dass der Abstand einer Laterne zum Straßenrand oder zur Fahrbahnmarkierung gemessen wird, anschließend das Radarmessgerät im gleichen Abstand zum Stra-Benrand oder zur Fahrbahnmarkierung aufgestellt wird und dann mit Hilfe einer Winkelskala und ggf. einem Fernglas das Radarmessgerät in Bezug auf den Referenzpunkt ausgerichtet wird. Je weiter der Referenzpunkt vom Radarmessgerät entfernt ist, desto genauer kann die Einstellung des Ausrichtwinkels erfolgen. Nachteilig bei diesem Verfahren ist, dass die Einstellung des Radarmessgerätes auf Basis eines Winkelmessers ein gewisses Geschick erfordert, da die exakte Ausrichtung zum Radarmessgerät und zum Referenzpunkt schwierig ist. Das Ausrichtverfahren birgt Fehlerquellen in sich, die die Messgenauigkeit negativ beeinflussen können. Unabhängig davon ist die Ausrichtung mit Hilfe des Winkelmessgerätes zeitaufwendig.

Die DE 100 17 575 A1 beschreibt ein transportables Verkehrsüberwachungsgerät, das in einem transportablen Behälter untergebracht ist. Der Behälter weist ein Fenster auf, hinter welchem die Kamera montiert ist. Der Behälter ist weiterhin mit einem Paar Transportrollen versehen und nach Art einer Sackkarre bewegbar. Zur Verkehrsüberwachung wird der Behälter aus einem Fahrzeug herausgezogen und über die Rollen an den Einsatzort gebracht. Die zueinander parallelen optischen Achsen von Kamera und Blitzgerät sind unter einem Winkel schräg zur Vorderseite des Behälters angeordnet. Auch die Radarkeule des Radargeräts bildet diesen Winkel mit der Vorderseite des Behälters. Der Winkel ist dabei so gewählt, dass die Kamera, Radarkeule und das Blitzgerät den Vorschriften entsprechend ausgerichtet sind, wenn die Seitenflächen des Behälters genau parallel zur Straßenkante ausgerichtet sind. Diese Ausrichtung kann mittels eines auf dem Deckel des Behälters montierten Richtfernrohrs erfolgen.

Es sind Radarmessgeräte bekannt, die in Kästen oder Koffern mit nur geringen Abmessungen untergebracht sind. Die Messgeräte selbst weisen dabei nur sehr geringe Abmessungen auf, jedoch ist die Energieversorgung, oftmals eine Batterie oder ein Akkumulator ebenfalls innerhalb des Kastens untergebracht. Das Gehäuse weist beispielsweise eine Höhe von etwa 50 cm, eine Breite von etwa 40 cm und eine Tiefe von etwa 30 cm auf, die Abmessungen können natürlich variieren. Das Radarmessgerät selbst, bzw. ein Gehäuse des Radarmessgerätes weist dagegen nur eine Breite von etwa 30 cm, eine Höhe von etwa 10 cm und eine Tiefe von ebenfalls 10 cm auf. Innerhalb dieses Gehäuses ist eine Antenne angeordnet, die planparallel zur Frontfläche des Gehäuses ausgerichtet ist. Das Radarmessgerät bzw. das Gehäuse ist derart im Kasten angeordnet, dass die Frontfläche des Gehäuses planparallel zur Frontseite des Kastens ausgerichtet ist, so dass entsprechend auch die Antenne planparallel zur Frontseite des Gehäuses angeordnet ist.

Ein solches Seitenradarmesssystem wird beispielsweise von der Firma DataCollect Traffic Systems GmbH & Co. KG betrieben. Mit Hilfe eines solchen Seitenradarmessgerätes ist die Erfassung von der Anzahl an Kraftfahrzeugen, der Geschwindigkeit, der Länge und der Fahrtrichtung möglich. Sensoren auf- oder in dem Straßenbelag sind nicht notwendig. Die Gehäuse derartiger Seitenradarmessgeräte werden mit Hilfe geeigneter Verbindungsmittel an Laternenpfählen oder Straßenschildern befestigt. Aufgrund komplexer Berechnungsalgorithmen ist eine Installation des Seitenradarmessgerätes in Abständen und Höhen von bis zu 12 m neben oder über der Fahrbahn möglich.

Der vorliegenden Erfindung liegt die Aufgabe zugrunde, eine Ausrichtvorrichtung für Radarmessgeräte zu schaffen, mit deren Hilfe eine möglichst exakte Ausrichtung der Radarmessgeräte schnell und einfach möglich ist. Die Ausrichtvorrichtung soll dabei gewährleisten, dass ein Zentralstrahl des Richtstrahls der Antenne in einem gewünschten Ausrichtwinkel auf die zu messenden Objekte, vorzugsweise Kraftfahrzeuge trifft.

Erfindungsgemäß wird die Aufgabe durch eine Seitenradarausrichtvorrichtung mit den Merkmalen des Patentanspruchs 1 gelöst.

Mit Hilfe der erfindungsgemäßen Ausrichtvorrichtung ist die Einstellung bzw. Ausrichtung des Radarmessgerätes schnell und einfach möglich. Für eine korrekte Ausrichtung ist es dabei lediglich notwendig, das Anlageelement an die Frontfläche des Radarmessgerätes oder dann, wenn dieses in einem Kasten untergebracht ist, an die Frontseite des Kastens anzulegen. Das Ausrichtelement ist gegenüber der Anlagefläche um eine vertikale Achse genau um den Betrag verdreht, der dem Ausrichtwinkel entspricht, unter dem der Zentralstrahl des Richtstrahls auf die zu messenden Fahrzeuge auftreffen soll. Dies bedeutet, dass das Ausrichtelement lediglich parallel zur Fahrbahn ausgerichtet werden muss, die Antenne de Radarmessgerätes ist dann automatisch richtig ausgerichtet. Weitere Messgeräte, insbesondere Winkelmessgeräte sind nicht mehr notwendig. Um die Parallelität zur Straße zu erreichen, kann ebenfalls ein entfernt stehender Laternenpfahl oder ein manuell in einem bestimmten Abstand zur Straße aufgestellter Stab oder Pfahl, beispielsweise eine Messlatte, benutzt werden.

Vorzugsweise weist die Ausrichtvorrichtung ein Auflageelement auf, das mit dem Anlageelement ein Ausrichtwinkel von 90° einschließt. Dieses Auflageelement weist vorzugsweise eine Breite von etwa 5 bis 10 cm auf und kann auf das Radarmessgerät oder das Gehäuse derart aufgelegt werden, dass dann das Anlageelement beispielsweise am Gehäuse anliegt. Dies bedeutet, dass sich die Ausrichtvorrichtung auf dem Radarmessgerät oder dem Gehäuse abstützt und vom Benutzer nicht in einem bestimmten Abstand zu einem Untergrund gehalten werden muss. Bei der Verwendung der erfindungsgemäßen Ausrichtvorrichtung muss also lediglich das Auflageelement auf das Radarmessgerät oder das Gehäuse aufgelegt werden und anschließend das Anlageelement in Anlage mit der Frontfläche des Radarmessgerätes oder der Frontseite des Gehäuses gebracht werden.

Die Ausrichtung ist dann besonders einfach, wenn das Radarmessgerät oder das Gehäuse zunächst an einem Pfahl, beispielsweise am Laternenpfahl, mit Hilfe geeigneter Befestigungsmittel befestigt wird. Es kann dann grob in die richtige Richtung gedreht und anschließend mit Hilfe der erfindungsgemäßen Ausrichtvorrichtung exakt ausgerichtet werden.

Die Ausrichtung kann dadurch weiter vereinfacht werden, dass das Anlageelement mit Hilfe einer lösbaren Verbindung an dem Radarmessgerät oder dem Gehäuse befestigbar ist. Als besonders vorteilhaft hat sich die Verwendung eines Saugnapfes aus einem entsprechend elastischen Kunststoff oder Gummi erwiesen. Mit diesem kann die Ausrichtvorrichtung schnell und einfach fest mit dem noch auszurichtenden Radarmessgerät oder Gehäuse verbunden werden. Dies ist insofern vorteilhaft, da der Benutzer dadurch zur genauen Ausrichtung beide Hände zur Verfügung hat. Nach Anbringen der Ausrichtvorrichtung an dem Radarmessgerät oder dem Kasten kann er mit beiden Händen die zuvor vorfixierte Verbindung lösen und das Radarmessgerät oder das Gehäuse ausrichten, wobei er lediglich auf das Ausrichtelement zu achten braucht.

Schließlich wird die Ausrichtung dadurch weiter erleichtert, dass zwischen dem Anlageelement und dem Ausrichtelement ein Verbindungselement, vorzugsweise ein längliches, stangenartiges Element, angeordnet ist, das die Bedienung oder Nutzung des Ausrichtelementes durch den Abstand erleichtert.

Das Ausrichtelement kann jede übliche und geeignete Zielvorrichtung aufweisen. Als einfachste Möglichkeit bietet sich die Verwendung von Kimme und Korn an, möglich sind aber auch Zielvorrichtungen, wie sie bei Gewehren eingesetzt werden. Eine besonders vorteilhafte Ausführungsvariante beinhaltet die Verwendung eines Laserstrahls, der exakt in dem gewünschten Ausrichtwinkel zur Anlagefläche ausgesendet wird. Wird beispielsweise ein weit entfernter Laternenpfahl zur Ausrichtung genutzt, kann der Bedienende auch bei schlechter Sicht zum Beispiel aufgrund von Nebel oder Dunkelheit mit Hilfe des Laserstrahls das entfernt liegende Objekt sicher anvisieren. Geeignet ist die Verwendung handelsüblicher Laserpointer, vorteilhafterweise in Verbindung mit einem Fernglas. Um ein entferntes Ziel, beispielsweise eine Messlatte oder eine Verkehrshütchen, leichter anvisieren zu können, kann an diesem eine Reflektorfolie angebracht sein, wodurch der Lichtpunkt des Laserpointers besser zu erkennen ist.

Die Ausrichtvorrichtung kann eine Verstelleinrichtung aufweisen, die es ermöglicht, das Ausrichtelement aus der Horizontalen heraus, also in einer zum Untergrund vertikalen Ebene zu schwenken. Dies bedeutet, dass auch höher oder niedriger angeordnete Objekte oder Ziele problemlos anvisiert werden können.

Der zwischen der Anlagefläche und dem Ausrichtelement gewünschte Ausrichtwinkel kann unveränderbar vorfixiert sein, es kann jedoch auch die Möglichkeit vorgesehen sein, den Ausrichtwinkel um eine vertikale Achse zu drehen. Dies kann beispielsweise mit Hilfe einer einfachen lösbaren Verbindung geschehen, wobei mit Hilfe einer Skala der Verdrehwinkel ablesbar ist. Möglich ist, dass das Verbindungselement drehbar ausgeführt ist, möglich ist aber auch, dass das Ausrichtelement lösbar an dem Verbindungselement befestigt ist. Fehleinstellungen durch den Benutzer werden jedoch gerade dadurch sicher vermieden, dass diese Schwenkmöglichkeit nicht vorgesehen ist, sondern dass der Benutzer aus mehreren Ausrichtvorrichtungen mit verschiedenen voreingestellten Ausrichtwinkeln für bestimmte Bedingungen jeweils geeignete auswählt.

Anhand der nachfolgenden Figurenbeschreibung wird die Erfindung näher erläutert. Die gezeigte Ausführungsvariante soll dabei lediglich beispielhaften Charakter haben, sie soll die Erfindung nicht auf gezeigte Detaillösungen beschränken.

Es zeigen:

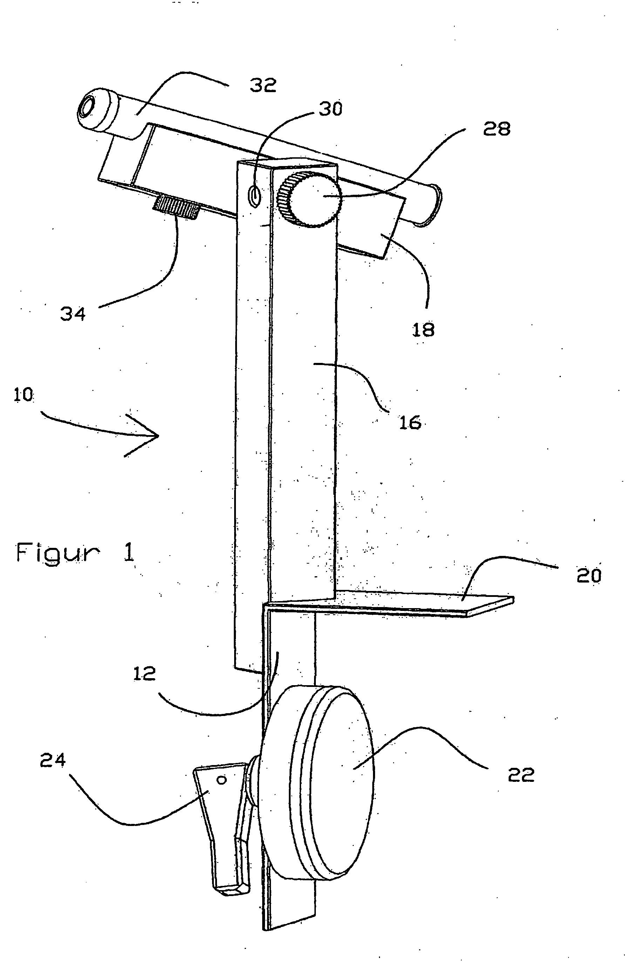

- Fig. 1:: eine erfindungsgemäße Ausrichtvorrichtung für Radarmessgeräte in Seitenansicht,
- Fig. 2:: die erfindungsgemäße Ausrichtvorrichtung von oben,
- Fig. 3:: die erfindungsgemäße Ausrichtvorrichtung an einem Gehäuse eines Radarmessgerätes, das in einem Kasten untergebracht ist.

Wie sich aus den Figuren ergibt, weist eine erfindungsgemäße Ausführungsvariante einer Ausrichtvorrichtung 10 ein Anlageelement 12 zur Anlage an einem Gehäuse 14 eines Radarmessgerätes und ein Verbindungselement 16, das sich vom Anlageelement aus stangenmäßig erstreckt und an dessen freien Ende ein Ausrichtelement 18 angeordnet ist, auf.

Das Anlageelement 12 geht im gezeigten Ausführungsbeispiel in ein rechtwinklig zum Anlageelement 12 angeordnetes Auflageelement 20 über, das zur Auflage auf dem Gehäuse 14 dient. Das Anlageelement 12 und das Auflageelement 20 schließen also vorzugsweise einen Winkel von 90° ein.

Weiterhin ist ein Saugnapf 22 gezeigt, dessen Haupterstreckungsfläche parallel zur Haupterstreckungsfläche des Anlageelements 12 verläuft und der auf der dem Gehäuse 14 zugewandten Seite des Anlageelementes 12 angeordnet ist. Mit Hilfe des Saufnapfes 22, der mit einem auf der gegenüberliegenden Seite des Anlageelementes 12 angeordneten Hebel 24 betätigbar ist, kann die Ausrichtvorrichtung 10 schnell und einfach an einer Frontfläche 26 des Gehäuses 14 befestigt werden.

Das Verbindungselement 16 ist im vorliegenden Ausführungsbeispiel durch ein Rohr mit quadratischen bzw. rechteckigen Querschnitt gebildet. Das Ausrichtelement 18 ist an einer Längsseite des Verbindungselementes 16 mit Hilfe einer ersten Schraube 28, die sich durch eine Öffnung innerhalb des Verbindungselementes 16 erstreckt, befestigt. Das Verbindungselement 16 gemäß der gezeigten Ausführungsform weist zwei weitere Öffnungen 30 auf, durch die die erste Schraube 28 dann hindurch geführt werden kann, wenn das Ausrichtelement 18 an einer anderen Seitenfläche des Verbindungselementes 16 zur Anlage kommen soll. Das Ausrichtelement 18 kann mit Hilfe der ersten Schraube 28 gelöst und in einer vertikalen Ebene geschwenkt werden, sodass das Ausrichtelement 18 auch schräg zum nicht gezeigten Untergrund verlaufen kann. In der gewünschten Position ist das Ausrichtelement 18 dann mit der ersten Schraube 28 fixierbar.

Auf dem Ausrichtelement 18 ist vorteilhafterweise ein Laserpointer 32 als Lichtquelle angeordnet. Anstelle des Laserpointers 32 ist jede geeignete andere Lichtquelle einsetzbar, wesentlich ist nur, dass diese einen Lichtpunkt aussendet, der auch auf weit entfernten Zielpunkten gut zu erkennen ist. Der Laserpointer 32 ist mit Hilfe eines Schalters 34 ein- und ausschaltbar.

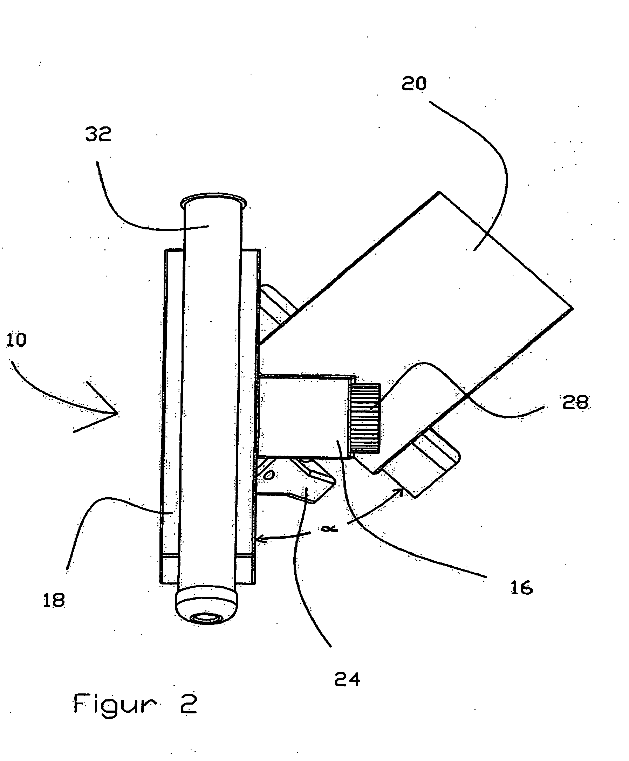

Insbesondere Figur 2. verdeutlicht, dass das Ausrichtelement 18 im gezeigten Ausführungsbeispiel einen Winkel a von 45° zum Anlageelement 12 einschließt. Das Anlageelement 12 ist in Figur 2 nicht zu erkennen, der Verlauf ergibt sich jedoch aus dem mit dem Anlageelement 20 verbundenen Auflageelement 20.

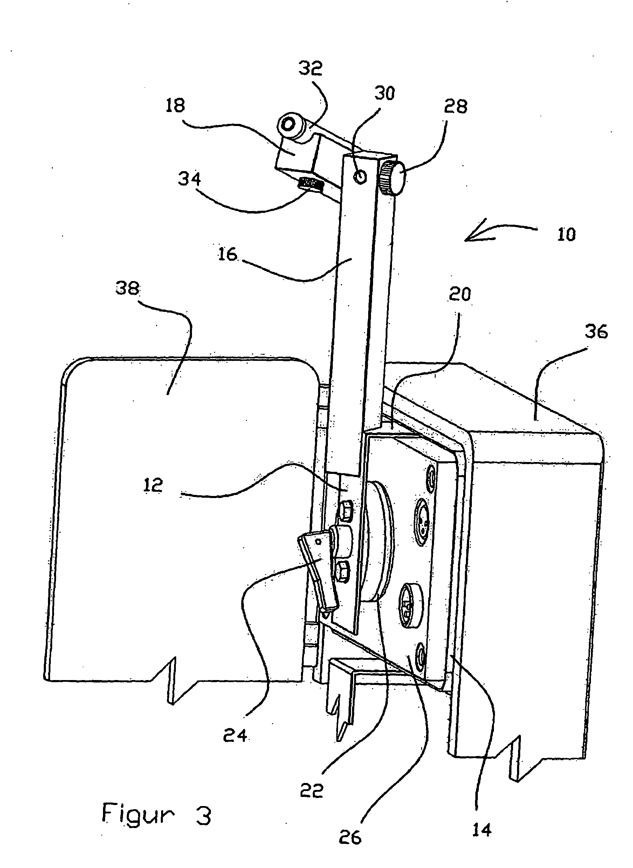

Figur 3 verdeutlicht die Anbringung der Ausrichtvorrichtung 10 an einem Gehäuse 14 des Radarmessgerätes. Das Gehäuse 14 bzw. das Radarmessgerät ist in einem Kasten 36 mit einem Deckel 38 angeordnet, der wiederum an einem Pfeiler, beispielsweise einer Straßenlaterne oder einem Straßenschild befestigbar ist. Die Ausrichtvorrichtung 10 wird also lediglich auf das Gehäuse 14 aufgesetzt und der Saugnapf 22 an der Frontfläche 26 befestigt. Das Ausrichtelement 18 ist dann automatisch im richtigen Winkel a zur Frontseite 26 des Gehäuses 14 angeordnet. Anstelle des Anbringens am Gehäuse 14 ist es auch möglich, die Ausrichtvorrichtung am Kasten 36 zu befestigen.

Die Erfindung ist nicht auf die beschriebenen Ausführungsbeispiele beschränkt, sondern erstreckt sich auch auf alle gleichartigen und gleichwirkenden Ausführungsvarianten. Weitere Vorteile und Eigenschaften der Erfindung ergeben sich aus den nachfolgenden Patentansprüchen.

## Patentansprüche

1. Seitenradarausrichtvorrichtung (10) für ein an einem feststehenden Objekt mit Abstand zu einem Untergrund befestigtes Seitenradarmessgerät mit einem Gehäuse (14), das eine Frontfläche (26) aufweist, dessen emittierter Zentralstrahl in einem Winkel von 45° zur Bewegungsrichtung von zu messenden Fahrzeugen ausgesendet werden muss, wobei die Seitenradarausrichtvorrichtung (10) aufweist
- ein Anlageelement (12), das mit seiner dem Gehäuse (14) zugewandten ebenen Haupterstreckungsfläche derart mit dem Gehäuse (14) des Seitenradarmessgeräts lösbar verbindbar ist, dass sich die ebene Haupterstreckungsfläche des Anlageelements (12) planparallel zu einer Antenne des Seitenradarmessgerätes erstreckt, wobei die Antenne ebenfalls planparallel zur Frontfläche (26) des Gehäuses (14) angeordnet ist,
- ein mit dem Anlageelement (12) verbundenes Ausrichtelement (18) mit einer Zielvorrichtung (32), welches gegenüber der dem Gehäuse (14) zugewandten ebenen Haupterstreckungsfläche des Anlageelementes (12) in einer horizontalen Ebene um eine vertikal zum Untergrund verlaufende Achse verschwenkt angeordnet ist, so dass das Anlageelement (12) und die Zielrichtung der Zielvorrichtung (32) einen Ausrichtwinkel (a) von 45° einschließen, wobei das Ausrichtelement (18) mit der Zielvorrichtung zur Anvisierung unterschiedlich hoher Ziele in einer zum Untergrund vertikalen Ebene verschwenkbar ausgeführt ist,
- ein ebenes flächiges Auflageelement (20), das mit seiner dem Gehäuse (14) zugewandten ebenen Fläche und der dem Gehäuse (14) zugewandten ebenen Haupterstreckungsfläche des Anlageelementes (12) einen Winkel von 90° einschließt, und derart angeordnet und ausgeführt ist, dass das Anlageelement (12) und das Auflageelement (20) jeweils mit ihrer dem Gehäuse (14) zugewandten ebenen Fläche bzw. Haupterstreckungsfläche gleichzeitig mit dem Gehäuse (14) des Seitenradarmessgerätes in Anlage bringbar sind.

2. Seitenradarausrichtvorrichtung (10) nach Anspruch 1, **dadurch gekennzeichnet, dass** das Anlageelement (12) zur Befestigung an dem Radarmessgerät einen Saugnapf (22) aufweist.

3. Seitenradarausrichtvorrichtung (10) nach Anspruch 1 oder Anspruch 2, **dadurch gekennzeichnet, dass** zwischen dem Anlageelement (12) und dem Ausrichtelement (18) ein Verbindungselement (16) angeordnet ist.

4. Seitenradarausrichtvorrichtung (10) nach einem der Ansprüche 1 bis 3, **dadurch gekennzeichnet, dass** an dem Ausrichtelement (18) ein als Zielvorrichtung (32) ein Laserpointer (32) angeordnet ist.

## Claims

1. Side-radar aligning device (10) for a side-radar measuring device, which is attached to a fixed object at a distance from an underground and has a housing (14) comprising a frontal surface (26), whose emitted central beam has to be transmitted at an angle of 45° to the direction of movement of vehicles to be measured, the side-radar aligning device (10) comprising
- a contact member (12) which, with its plane main extension surface facing the housing (14), is detachably connected to the housing (14) of the side-radar measuring device in such a way that the plane main extension surface of the contact member (12) extends plane-parallel to an antenna of the side-radar measuring device, the antenna also being disposed plane-parallel to the frontal surface (26) of the housing (14),
- an alignment member (18) connected to the contact member (12) and having an aiming device (32) which is disposed, relative to the plane main extension surface of the contact member (12) facing the housing (14), pivoted in a horizontal plane about an axis extending vertically to the underground, so that the contact member (12) and the aiming direction of the aiming device (32) include an alignment angle (a) of 45°, the alignment member (18) with the aiming device being configured so as to be pivotable in a plane vertical to the underground in order to take aim at targets of different heights,
- a plane flat support member (20), which, with its plane surface facing the housing (14) and the plane main extension surface of the contact member (12) facing the housing (14), includes an angle of 90° and is disposed and configured in such a way that the contact member (12) and the support member (20) can each be brought into contact simultaneously with the housing (14) of the side-radar measuring device with their plane surface facing the housing (14) and main extension surface, respectively.

2. Side-radar aligning device (10) according to claim 1, **characterised in that** the contact member (12) comprises a suction cup (22) for attachment to the radar measuring device.

3. Side-radar aligning device (10) according to claim 1 or claim 2, **characterised in that** a connecting member (16) is disposed between the contact member (12) and the alignment member (18).

4. Side-radar aligning device (10) according to any one of the claims 1 to 3, **characterised in that** a laser pointer (32) is disposed as an aiming device (32) on the alignment member (18).

## Revendications

1. Dispositif d'orientation de radar à visée latérale (10) pour un appareil de mesure radar à visée latérale qui est fixé sur un objet fixe à distance d'un fond et qui comprend un boîtier (14) lequel présente une face frontale (26) dont le faisceau central émis doit être émis à un angle de 45° par rapport à la direction de déplacement de véhicules à mesurer, le dispositif d'orientation de radar à visée latérale (10) comprenant
- un élément d'appui (12) qui peut être relié de façon amovible, par sa face d'extension principale plane tournée vers ledit boîtier (14), au boîtier (14) de l'appareil de mesure radar à visée latérale, de manière à ce que ladite face d'extension principale plane de l'élément d'appui (12) s'étende de façon plane et parallèle à une antenne dudit appareil de mesure radar à visée latérale, ladite antenne étant disposée également de façon plane et parallèle à la face frontale (26) du boîtier (14),
- un élément d'orientation (18) qui est relié à l'élément d'appui (12) et comprend un dispositif de visée (32) et qui est disposé à pivotement autour d'un axe s'étendant verticalement au fond, dans un plan horizontal, par rapport à la face d'extension principale plane de l'élément d'appui (12) tournée vers ledit boîtier (14), de sorte que ledit élément d'appui (12) et la direction de visée du dispositif de visée (32) incluent un angle d'orientation (a) de 45°, ledit élément d'orientation (18) avec le dispositif de visée étant réalisé de manière à pouvoir pivoter dans un plan vertical au fond pour viser des cibles à hauteurs différentes,
- un élément de support (20) plan à deux dimensions dont la face plane tournée vers ledit boîtier (14) forme avec la face d'extension principale plane dudit élément d'appui (12) tournée vers le boîtier (14) un angle de 90°, et qui est agencé et réalisé de manière à ce que ledit élément d'appui (12) et ledit élément de support (20) puissent être mis en appui simultanément sur ledit boîtier (14) de l'appareil de mesure radar à visée latérale respectivement par la face plane tournée vers le boîtier (14) et la face d'extension principale.

2. Dispositif d'orientation de radar à visée latérale (10) selon la revendication 1, **caractérisé par le fait que** ledit élément d'appui (12) présente une ventouse (22) pour la fixation sur ledit appareil de mesure radar.

3. Dispositif d'orientation de radar à visée latérale (10) selon la revendication 1 ou la revendication 2, **caractérisé par le fait qu'**un élément de jonction (16) est disposé entre ledit élément d'appui (12) et ledit élément d'orientation (18).

4. Dispositif d'orientation de radar à visée latérale (10) selon l'une quelconque des revendications 1 à 3, **caractérisé par le fait que** sur ledit élément d'orientation (18) est disposé un pointeur laser (32) en tant que dispositif de visée (32).
